**Europäisches Patentamt**

**European Patent Office**

**Office européen des brevets**

(19)

(11) Veröffentlichungsnummer: **0 028 840**

**A2**

(12) # EUROPÄISCHE PATENTANMELDUNG

(21) Anmeldenummer: **80106977.4**

(22) Anmeldetag: **12.11.80**

(51) Int. Cl.³: **F 24 D 11/02**

(30) Priorität: **12.11.79 DE 2945607**

(43) Veröffentlichungstag der Anmeldung:
**20.05.81 Patentblatt 81/20**

(84) Benannte Vertragsstaaten:
**AT BE CH FR GB IT LI LU NL SE**

(71) Anmelder: **Krüger, Bernhard**
**Albert-Moser-Strasse 63**
**D-7053 Kernen i.R.(DE)**

(72) Erfinder: **Hesslinger, Siegmar**
**Hohenstaufenstrasse 42**
**D-7141 Möglingen(DE)**

(74) Vertreter: **Lutz, Johannes Dieter, Dr.**
**Tiroler Strasse 15**
**D-7250 Leonberg(DE)**

(54) **Anordnung zur Einkopplung von Wärme in den Primärkreislauf der Wärmepumpe einer Wärmepumpen-Heizanlage.**

(57) Es wird eine Anordnung zur Einkopplung von Wärme in den Primärkreislauf der Wärmepumpe einer zur Raumheizung und Brauchwasser-Aufbereitung geeigneten monovalenten Wärmepumpen-Heiz-anlage angegeben, die insbesondere mit Rückgewinnung der aus dem Gebäude abströmenden Wärme arbeitet. Hierzu sind an den Primärkreislauf der Wärmepumpe angeschlossene Wärmetauscherrohre, die als Wärmetransportmittel Wasser mit einem Frostschutzmittel enthalten, in einer inneren Ebene einer Wärmedämmschicht angeordnet, die an der Außenseite der tragenden Wandschale des zu beheizenden Gebäudes angeordnet ist. Zwischen einer äußeren und einer inneren Lage der Wärmedämmschicht ist eine Zwischenschicht aus einem Material mit hoher Wärmeleitfähigkeit vorgesehen, mit der die Wärmetauscherrohre in gutem Wärmekontakt stehen.

EP 0 028 840 A2

./...

Croydon Printing Company Ltd.

Fig.1

- 1 -

Bernhard Krüger                    Leonberg,den 7.11.1980
Albert-Moser-Straße 63             P 79 93
7053 Kernen i.R.

Anordnung zur Einkopplung von Wärme in den Primärkreislauf
der Wärmepumpe einer Wärmepumpen-Heizanlage.

Die Erfindung betrifft eine Anordnung zur Einkopplung von
Wärme in den Primärkreislauf der Wärmepumpe einer zur Raumheizung und Brauchwasser-Aufbereitung in einem Gebäude vorgesehenen Wärmepumpen-Heizanlage,mit den im Oberbegriff des
Patentanspruchs 1 aufgeführten,bekannten Merkmalen.

Um eine Wärmepumpenheizung mit elektrisch betriebener Wärmepumpe unter dem Gesichtspunkt der Einsparung von Primärener-
gie(z.B.Öl,Kohle,Gas)wirtschaftlicher betreiben zu können als
eine konventionelle,mit Verbrennung solcher Primärenergieträger arbeitende Heizanlage,z.B.eine Ölheizung,muß die
Leistungsziffer der Wärmepumpe mindestens gleich dem Reziprokwert des Wirkungsgrades sein,mit dem der jeweilige Primärenergieträger in elektrische Energie umgewandelt werden
kann.Da eine Wärmepunpenheizanlage in aller Regel um ca.150-
250% höhere Investitionskosten bedingt als eine Ölheizung,
muß die Leistungsziffer der Wärmepumpe sogar noch höher sein,
damit sich die höheren Investitionskosten amortisieren lassen.Weiter sollte die Differenz zwischen der Temperatur $T_2$,

mit der die Wärme der Heizanlage entnommen wird,und der Temperatur $T_1$,mit der die Wärme in den Verdampferkreislauf der Wärmepumpe,deren Wirkungsweise als bekannt vorausgesetzt sei,eingekoppelt wird,unter dem Gesichtpunkt der Maximierung der Leistungsziffer der Wärmepumpe möglichst klein sein.Da diese Leistungsziffer im wesentlichen gleich dem Verhältnis der der Heizanlage insgesamt entnommenen Wärme Q zu dem Gesamtwärmeverlust $Q_V$,jeweils in der Zeiteinheit gesehen,ist,wird auch deutlich,daß es zur Erzielung einer günstig hohen Leistungsziffer der Wärmepumpe wesentlich ist,daß ein Gebäude mit einer wirksamen,den Wärmeverlust möglichst klein haltenden Wärmedämmung versehen ist.

Um diesen Anforderungen wenigstens teilweise zu genügen, ist bei einer Anordnung der eingangs genannten Art,die durch offenkundige Vorbenutzung in der Bundesrepublik Deutschland bekannt geworden ist,eine die Raumumschließungsflächen eines Gebäudes allseitig umgebende Wärmedämmschicht vorgesehen, wobei die Außenwände zum größten Teil doppelschalig mit zwischen den Wandschalen liegender Wärmedämmung aufgebaut sind. Die äußere Schale ist als Betonwand mit einer Stärke von ca. 12 cm ausgeführt.Die innere,das statische Element bildende Schale ist ebenfalls als Betonwand mit einer Dicke von ca.14 cm ausgebildet.Die z.B.aus Polystyrol-Hartschaumstoff bestehende Wärmedämmschicht hat eine Dicke von ca. 10 cm.Auf der dem Rauminneren zugekehrten Seite der äußeren Wandschale sind Kunststoffrohre,z.B.Polyäthylenrohre,mit einem Außendurchmesser von 20 mm und einem Innendurchmesser von 16mm einbetoniert,die mit Glykolsole durchflossen sind und den Kühler für den Verdampferteil der Wärmepumpe bilden.Weiter sind in der der Wärmedämmschicht zugekehrten äußeren Schicht der inneren Wandschale,gegebenenfalls auch in den Innenwänden und in den Wohnungstrenndecken wasserdurchströmte Kunststoffrohre vorgesehen,die einen an die
Wärmeabgabeseite der Wärmepumpe angeschlossenen Wärmetauscher zur Warmbeheizung bilden.

Die bekannte Anordnung hat unter konstruktiven wie funktionellen Gesichtspunkten zumindest die folgenden Nachteile:

Der zweischalige Wandaufbau mit in die beiden Wandschalen
integrierten Wärmetauscher-Systemen ist äußerst kompliziert
und arbeitsintensiv.Die Wärmetauscherrohre müssen,damit sie
beim Betonieren der äußeren und der inneren Wandschale nicht
aus ihren Soll-Lagen gerissen werden,an zahlreichen Stellen,
an den zur Bewehrung der Wandschalen vorgesehenen Baustahlmatten fixiert werden.Problematisch ist auch die Anordnung
der Wärmedämmschicht zwischen zwei Betonschichten,die zweckmäßigerweise gleichzeitig betoniert werden.Um die Wärmedämmschicht und die Bewehrungsmatten,an denen die Wärmetauscherrohre befestigt sind,sicher in ihrer Soll-Lage halten zu können,sind aufwendige Stützmaßnahmen erforderlich,und es muß
beim Betonieren mit äußerster Sorgfalt darauf geachtet werden,daß die Schalungs-Hohlräume für die innere und die äussere Wandschale gleichmäßig mit Beton aufgefüllt werden,damit die Wärmedämmschicht nicht von einer Seite her durchbrechen kann.Dies führt insgesamt zu drastisch erhöhten
Rohbaukosten,sodaß sich die durch die bekannte Anordnung
bedingten Mehrkosten für die Erstellung der Wärmepumpen-
Heizanlage,wenn überhaupt,sehr langsam amortisieren.Darüber hinaus ist die bekannte Anordnung auch mit hohen Transmissions-Wärmeverlusten behaftet:da sowohl die zur Wärmeabgabe an die Innenräume des Gebäudes wie auch die zur Wärmeeinkopplung in den Verdampfer der Wärmepumpe vorgesehenen Wärmetauscherrohre in unmittelbarer Nähe der Wärmedämm-

schicht angeordnet sind,ist der Temperaturgradient über dieser Wärmedämmschicht besonders hoch,was zu entsprechend großen Transmissionsverlusten führt.Der Vorteil der für die Erzielung einer hohen Leistungsziffer der Wärmepumpe an sich günstigen "großflächigen" Ausbildung des wärmeabgebenden Wärmetauschersystems wird durch diese Transmissionsverluste wieder aufgehoben.Eine nennenswerte Rückgewinnung und Mitausnutzung der aus dem Gebäude abströmenden Transmissionswärme ist bei der bekannten Anordnung praktisch nur dann erreichbar,wenn der Kühlerkreislauf der Wärmepumpe bei Temperaturen betrieben wird,die deutlich unterhalb der Gebäudeaußentemperatur liegen.Hieraus resultiert dann aber wiederum eine Erniedrigung der Leistungsziffer der Wärmepumpe,und es kommt hinzu,daß ein solcher Betrieb insbesondere an kalten Tagen mit unterhalb des Gefrierpunktes liegenden Außentemperaturen auch die Gefahr von Bauschäden erheblich vergrößern würde.

Aufgabe der Erfindung ist es daher,eine Anordnung der eingangs genannten Art zu schaffen,die bei insgesamt einfachem Aufbau eine Rückgewinnung der aus dem Gebäudeinneren abströmenden Wärme ermöglicht und insoweit im Jahresmittel einen Betrieb der Wärmepumpe mit günstig hoher Leistungsziffer gewährleistet.

Diese Aufgabe wird erfindungsgemäß durch die im kennzeichnenden Teil des Patentanspruchs 1 genannten Merkmale auf einfache Weise gelöst,wobei im einzelnen zumindest die folgenden Vorteils erzielt werden:

/5

Über die innerhalb der Wärmedämmschicht angeordnete Wärmeleitungsschicht kann der größte Teil des Transmissions-Wärmestromes in den Verdampferkreislauf der Wärmepumpe zurückgekoppelt werden,wobei es,um eine praktisch vollständige Ausnutzung der Transmissionswärme zu erreichen genügt, wenn die Wärmetransportmitteltemperatur im Verdampferkreislauf der Gebäudeaußentemperatur entspricht.Die Leistungsziffer der Wärmepumpe bleibt dadurch günstig hoch.

Die zur Realisierung der erfindungsgemäßen Anordnung erforderlichen baulichen Maßnahmen erfordern -über den speziellen Aufbau der Wärmedämmschicht hinaus- keinerlei besondere Gestaltung des Gebäudes selbst;weder ist eine zweischalige Bauweise erforderlich noch eine Betonbauweise für die tragende Innenwandschale.Vielmehr ist die erfindungsgemäße Anordnung auch bei einem ansonsten konventionell errichteten Gebäude realisierbar.Im Rahmen der durch die gesetzlichen Vorschriften markierten Grenzen bietet die erfindungsgemäße Anordnung die Gewähr dafür,daß die Wärmepumpen-Heizanlage als monovalente Heizanlage ausgelegt sein kann,was im Hinblick auf niedrige Investitionskosten ebenfalls günstig ist.

Um mit einer konventionellen Wärmedämmschicht ähnlich geringe Transmissionsverluste zu erreichen wie bei der erfindungsgemäßen Wärmedämmung mit Wärmerückgewinnung wäre bei der konventionellen Wärmedämmung eine mindestens dreimal größere Schichtdicke erforderlich.Verglichen mit dem optimalen Betrieb der erfindungsgemäßen Anordnung(Kühlmitteltemperatur in der Wärmeleitungsschicht = Gebäudeaußentemperatur)müßte eine konventionelle Wärmedämmschicht sogar eine unendlich große Dicke haben.

- 6 -

Obwohl nicht speziell auf eine großflächige Wärmeabgabe festgelegt, hat die erfindungsgemäße Anordnung in Verbindung mit einer solchen den Vorteil, daß ein großflächiger Wärmetauscher ohne weiteres an der Innenseite der tragenden Wand angeordnet sein kann, wo gegebenenfalls erforderliche Reparaturarbeiten ohne Schwierigkeit durchführbar sind, im Gegensatz zu der bekannten Anordnung, bei der die Behebung eines Schadens im inneren oder äußeren Wärmetauschersystem auf erheblich höhere Schwierigkeiten stossen würde.

Die erfindungsgemäß vorgesehene Wärmeleitungsschicht kann auf einfache Weise dadurch realisiert sein, daß die Wärmetauscherrohre durch ein engmaschiges Drahtgeflecht miteinander verbunden sind, das mittels einzelner oder mehrerer seiner quer zu den Wärmetauscherrohren verlaufender Drähte an diesem satt anliegend befestigt ist. Ein solches Drahtgeflecht kann dabei gleichzeitig als Bewehrung einer die Wärmetauscherrohre mit umschließenden, die Wärmedämmschicht bildenden Hartschaumstoffschicht ausgenutzt sein, jedenfalls dann, wenn diese aus vorgefertigten Teilen zusammensetzbar ist.

Die Wärmeleitungsschicht gemäß Anspruch 2, gegebenenfalls in der durch die Ansprüche 3 und 4 angegebenen weiteren Ausgestaltung bzw. Anordnung vermittelt bei der angegebenen Dimensionierung eine nahezu quantitative Umlenkung des Transmissions-Wärmestromes in die Verlegungsebene der Wärmetauscherrohre und damit auch eine nahezu vollständige Einleitung in das Transportmedium des Verdampferkreislaufs der Wärmepumpe, insbesondere dann, wenn die Wärmetauscherrohre ihrerseits aus einem Material mit hoher Wärmeleitfähigkeit bestehen.

In der durch die Merkmale des Anspruchs 5 angegebenen,die Wärmetauscherrohre allseitig umschließenden Gestaltung der Wärmeleitungsschicht gilt dies auch dann,wenn die Wärmetauscherrohre eine etwas geringere Wärmeleitfähigkeit haben und beispielsweise als Kunststoffrohre ausgebildet sind.Die Einbettung der Wärmetauscherrohre in eine aus festem Material bestehende,die Rohre allseitig umschliessende Wärmeleitungsschicht hat auch den Vorteil,daß die Rohre gut geschützt sind;es können dann Wärmetauscherrohre mit geringeren Wandstärken verwendet werden,die sich leicht verlegen lassen und aufgrund der geringen Wandstärke auch einen entsprechend geringen Wärmeleitwiderstand haben.

Durch die Merkmale des Anspruchs 6 ist eine aus einfachen, untereinander gleichartig ausgebildeten Plattenelementen zusammensetzbare Gestaltung einer solchen Wärmeleitungsschicht angegeben,die sich insbesondere für eine bauseitige Erstellung eignet.

Bei gemäß Anspruch 7 zweilagiger Ausbildung der Wärmeleitungsschicht kommt man im Vergleich zur einlagigen Gestaltung mit der halben Materialdicke für die Teillagen aus,sodaß eine sich an den Mantel der Wäremtauscherrohre anschmiegende Rillenprofilierung einfacher und exakter erzielbar ist.

Durch die Merkmale des Anspruchs 8 ist eine besonders einfache und dennoch wirkungsvolle symmetrische Gestaltung der Wärmeleitungsschicht mit in diese eingebetteten Wärmetauscherrohren angegeben.Eine zur Abstützung der beiden Lagen gegeneinander vorgesehene Kunststoff-Zwischenschicht ist dann zur Erhöhung ihrer Wärmeleitfähigkeit zweckmäßigerweise mit einer Metall-Draht-oder -Geflecht-Bewehrung versehen.

/8

- 8 -

In der Gestaltung gemäß den Ansprüchen 9 und 10 ist auch bei Verwendung von Kunststoff-Wärmetauscherrohren ein hinreichend guter Wärmeübergang zwischen planparallelen Teillagen der Wärmeleitungsschicht und den Wärmetauscherrohren gewährleistet.

Ein modulartiger Aufbau der erfindungsgemäßen Anordnung aus Fertigteilen gemäß den Ansprüchen 11-13 ist sowohl hinsichtlich der Herstellung wie auch der Montage mit erheblichen Vereinfachungen verbunden. Außerdem kann die Funktionsfähigkeit solcher Fertigteile werksseitig sehr viel einfacher getestet werden als auf der Baustelle.

Das Verlegungsschema der Wärmetauscherrohre gemäß den Ansprüchen 14 und/oder 15 hat den Vorteil, daß der Gesamtströmungswiderstand des primärseitigen Wärmetauschers und damit auch der Leistungsbedarf einer zur Wärmetransportmittel-Förderung vorgesehenen Umwälzpumpe günstig niedrig bleiben.

Weitere Einzelheiten und Merkmale der Erfindung ergeben sich aus der nachfolgenden Beschreibung von Ausführungsbeispielen anhand der Zeichnung.Es zeigen:

Fig.1    eine erfindungsgemäße Anordnung unter Verwendung einer ersten Ausführungsform einer mit Wärmetauscherrohren zur Wärmerückgewinnung ausgestatteten Wärmedämmschicht,

Fig.2    ein Temperaturprofil zur Veranschaulichung der Wirkungsweise der Anordnung gemäß Fig.1,

Fig.3-   verschiedene Gestaltungsmöglichkeiten einer in der
Fig.5    erfindungsgemäßen Anordnung einsetzbaren Wärmedämmschicht und

/9

Fig.6    eine bevorzugte Art der Verlegung der Wärmetauscherrohre in einer als Fertigteil ausgebildeten
Wärmedämmschicht-Element, aus dem Wärmedämmschichten für größere Abschnitte zusammensetzbar sind.

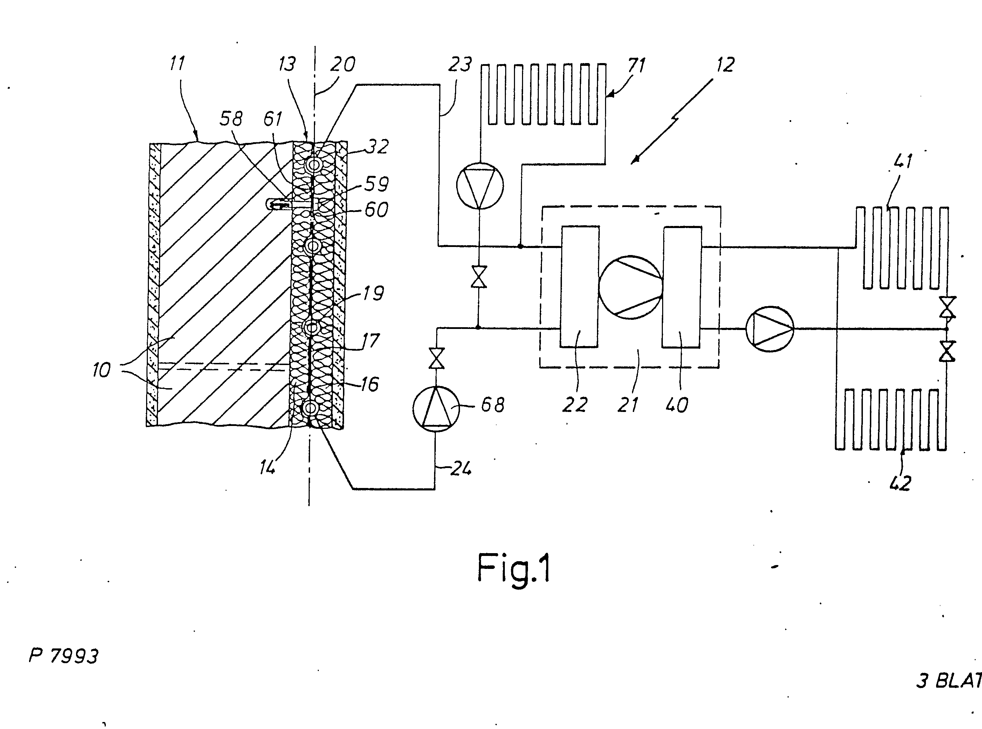

Die Fig.1 zeigt in ihrem linken Teil in einem horizontalen
Schnitt ein kurzes Stück einer z.B. aus Leichtbetonsteinen
aufgemauerten vertikalen Außenwand 11 eines im übrigen nicht
dargestellten Gebäudes, das  mittels einer im rechten Teil
der Fig.1 in stark vereinfachter, schematischer Form dargestellten monovalenten Wärmepumpenheizung 12 beheizbar ist.

Die für den Einsatz einer solchen Wärmepumpenheizung erforderliche Wärmedämmung des Gebäudes nach außen vermittelt
eine insgesamt mit 13 bezeichnete Wärmedämmschicht, die im
Bereich der Außenwände 11 an deren Außenseite angeordnet
ist und im Dachbereich, falls ein Flachdach vorgesehen ist
und, falls ein konventionelles Firstdach vorgesehen ist, zwischen den Dachsparren und der äußeren Dachhaut angeordent
ist.

Aufbau und Funktion dieser Wärmedämmschicht 13 wird im folgenden ohne Beschränkung der Allgemeinheit lediglich in Verbindung mit deren Anordnung an den Außenwänden 11 des Gebäudes erläutert:

Die Wärmedämmschicht 13 hat einen mehrschichtigen, sandwichartigen Aufbau mit einer gemäß Fig.1 inneren Lage 14 und
einer äußeren Lage 16 aus wärmedämmendem Material, beispielsweise 2 cm dicken Polystyrol-Hartschaumstoffplatten, zwischen denen eine Schicht 17 mit hoher Wärmeleitfähigkeit
angeordnet ist.

/10

In die Wärmedämmschicht sind mit beispielsweise mäander- oder spiralförmiger Verlegung Wärmetauscherrohre 18 eingebettet,die in entsprechend dem vorgesehenen Verlegungsmuster verlaufenden Rillen 19 der Wärmeleitungsschicht 17 flächig an dieser anliegen und somit in gutem Wärmekontakt zu dieser stehen.Bei der speziellen Gestaltung der Wärmedämmschicht 13 gemäß Fig.1 ist die Wärmedämmschicht als eine ca.2-3 mm dicke Aluminiumplatte ausgebildet,deren Rillenwände den der Außenwand zugewandten Mantelbereich der Wärmetauscherrohre 18 umschließen und satt an diesen anliegen.Die durch die Achsen der Wärmetauscherrohre 18 markierte Verlegungsebene 20 fällt mit der zur Außenwand 11 parallelen Längsmittelebene der Wärmedämmschicht 13 zusammen.

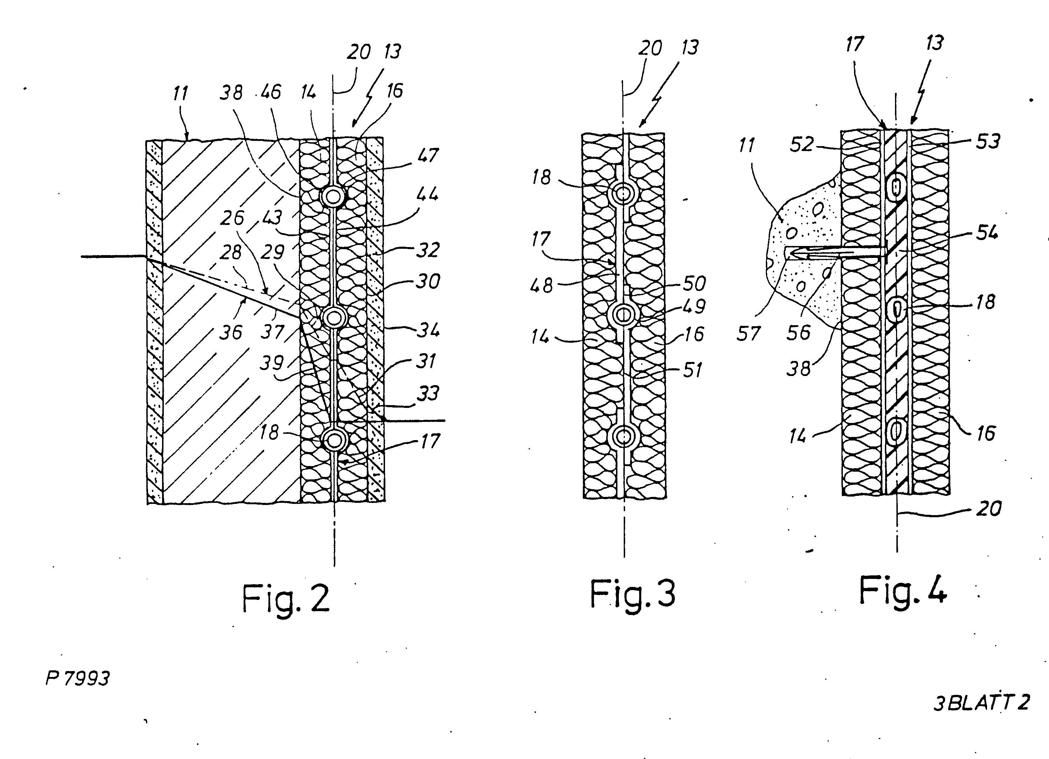

Die Wärmetauscherrohre 18 sind von einem frostgeschützten Wärmetransportmittel durchströmt und bilden den Kühler der zur Beheizung des Gebäudes vorgesehenen Wärmepumpe 21,an deren Verdampfer 22 sie über eine Vorlaufleitung 23 und eine Rücklaufleitung 24 angeschlossen sind.Zur Beschreibung der Wirkungsweise der insoweit beschriebenen Anordnung wird nunmehr auf die Fig.2 Bezug genommen:

Während der Stillstandphasen der Wärmepumpe 21 ergibt sich im stationären Zustand qualitativ das in Fig.2 gestrichelt eingezeichnete Temperaturprofil 26 mit dem über den Innenputz 27 und dem tragenden Außenwandabschnitt 11,etwa vom Wert der Innentemperatur $t_i$ aus flach abfallenden Ast 28, an den sich im Bereich der inneren Lage 14 der Wärmedämmschicht 13 ein erster,entsprechend dem höheren Wärmeleitwiderstand des Schaumstoffmaterials steiler abfallender Ast 29 des Temperaturprofils 26 anschließt.Im Bereich der Wärmeleitungsschicht 27 bleibt wegen derer hoher Wärme-

- 11 -

leitfähigkeit die Temperatur praktisch konstant. Zwischen der Außenseite der Wärmeleitungsschicht 17 und der Außenfläche 30 der äußeren Lage 16 der Wärmedämmschicht 16 folgt ein zweiter, entsprechend dem wiederum hohen Wärmewiderstand der äußeren Lage 16 steil abfallender Ast 31 des Temperaturprofils 26, an den sich im Bereich der Außenputzschicht 32 wieder ein flacher abfallender Ast 33 anschließt, der an der Wandaußenfläche praktisch den Anschluß an den dort herrschenden Wert der Außentemperatur $T_a$ vermittelt.

Dieser Temperaturverlauf 26 ist mit einem von der Gebäudeinnenseite nach außen fließenden Transmissions-Wärmestrom verknüpft, dessen Wärmeinhalt bei konventioneller Wärmedämmung verloren ist und durch die Heizanlage ständig nachgeliefert werden muß.

Dieser Wärmeverlust kann mit Hilfe der erfindungsgemäßen Anordnung weitestgehend vermieden werden, indem die Temperatur der Wärmeleitungsschicht 17 durch periodische Aktivierung der Wärmepumpe 21 vorzugsweise bis auf den Außentemperaturwert $T_a$ abgekühlt wird, wobei sich das in der Fig.2 in ausgezogenen Linien dargestellte Temperaturprofil 26 einstellt mit einem dem ersten flachen Ast 28 des Temperaturprofils 26 entsprechenden, jedoch geringfügig steiler abfallenden Ast 37 und einem sich an diesen anschließenden, dem ersten steil abfallenden Ast 29 des Temperaturprofils 26 entsprechenden, von der Außenseite 38 der Gebäudewand 11 bis zur Wärmeleitungsschicht 17 hin steil abfallenden Ast 39, der dort bereits an den Außentemperaturwert $T_a$ anschließt. Da nunmehr zwischen der Wärmeleitungsschicht 17 und der Gebäudeaußenseite kein Temperaturgradient mehr vorhanden ist, jedenfalls nicht in der betrachteten, die realen

/12

Verhältnisse jedoch sehr gut wiedergebenden Näherung,tritt auch kein Transmissions-Wärmeverlust auf;vielmehr wird eine praktisch vollständige Rückgewinnung der über die Gebäudeaußenwand 11 abströmenden Wärme erzielt,die mittels des durch die Wärmetauscherrohre 18 gebildeten Kühlers quantitativ in den Verdampferkreislauf der Wärmepumpe 21 eingekoppelt wird und dadurch zur Raumheizung und Brauchwasseraufbereitung nutzbar bleibt.Durch die solchermaßen erzielte, perfekte Wärmedämmung wird erreicht,daß die Wärmepumpe 21, je nach der Temperatur,bei der die Nutzwärme aus dem Kondensator 40 auf verschiedene Verbraucher 41 bzw.42 ausgekoppelt wird,zwar verschiedener,jeweils aber günstig hoher Leistungsziffer arbeitet.

Die den Figuren 1-5 entnehmbaren Gestaltungen der Wärmedämmschicht 13 unterscheiden sich im wesentlichen nur durch den Aufbau ihrer Wärmeleitungsschichten 17 und die Einbettung der Wärmetauscherrohre 18 in diese Wärmeleitungsschichten.Auf die diesbezüglichen Einzelheiten der Figuren 1-5 sei ausdrücklich Bezug genommen.

Bei der Wärmedämmschicht 13 gemäß Fig.2 ist die Wärmeleitungsschicht 17 symmetrisch bezüglich der Verlegungsebene 20 der Wärmetauscherrohre 18 ausgebildet.Sie umfaßt zwei Aluminiumplatten 43 und 44 mit einer Dicke von ca. 1-1,5 mm. Die Aluminiumplatten 43 und 44 sind entsprechend dem Verlegungsmuster der Wärmetauscherrohre 18 mit einander gegenüberliegenden Rillen 46 bzw.47 versehen,deren Wandungen satt an den Wärmetauscherrohren 18 und deren Mantel vollständig umschließen.Im Bereich zwischen den Wärmetauscherrohren 18 liegen die Aluminiumplatten 43 und 44 unmittelbar aneinander an.Bei einem schichtweisen Aufbau der Wärmedämmschicht 13 auf der Baustelle wird die äußere Aluminiumplatte 44,nachdem die innere Lage 14 der Wärmedämmschicht 13 und die innere Aluminiumplatte bereits an der Außenwand 11 auf geeignete Weise befestigt und die Wärmetauscherrohre 18 verlegt sind,zweckmäßigerweise an der inneren Aluminiumplatte 43 angeklebt und danch die äußere Lage 16 der Wärmedämmschicht 13 an der äußeren Aluminiumplatte festgeklebt.Es versteht sich,daß die äußere Aluminiumplatte 44 auch zuvor schon mit der äußeren Lage 16 der Wärmedämmschicht 13 verbunden sein kann und zusammen mit diser der inneren Aluminiumplatte 43 verbunden werden kann.

In der Gestaltung gemäß Fig.3 ist die Wärmeleitungsschicht aus Plattenelementen 48 zusammengesetzt,die in denjenigen Bereichen,in denen die Wärmetauscherrohre 18 parallel zueinander verlaufen,zwei Randrillen 49 haben,die einander benachbarte Wärmetauscherrohre 18 halbseitig umgreifen.Entlang der Verlegungsebene 20 sind die Plattenelemente 48 derart alternierend auf der Innen- bzw.Außenseite der Verlegungsebene 20 der Wärmetauscherrohre 18 angeordnet,daß jedes dieser Wärmetauscherrohre vollständig von den einander ge - genüberliegenden Rillenwänden umschlossen ist.Im Bereich schmaler Randflansche 50 sind die Plattenelemente 48 wechselseitig an den zwischen den Rillen 49 verlaufenden Mittelabschnitt 51 der Plattenelemente 48 befestigt,beispielsweise angeklebt.Wenn die Wärmeleitungsschicht 17 gemäß Fig.3 und die in diese eingebetteten Wärmetauscherrohre 18 als vorgefertigte Baueinheit für einen vorgegebenen Wandabschnitt ausgebildet sind,können die Plattenelemente 48 im Bereich ihrer Randflansche auch miteinander vernietet sein.Für einen bauseitigen Aufbau der Wärmedämmschicht 13 gemäß gemäß Fig.3 kann es auch günstig sein,wenn die wandseitig angeordneten Plattenelemente 48 einseitig oder beidseits ihrer Rillen nach außen gedrückte biegbare Lappen haben, die durch Ausnehmungen der gegenüberliegenden,außenseitig angeordneten Plattenelemente 48 hindurchtreten können und zu deren Befestigung lediglich umgebogen werden müssen. Auch beim Ausführungsbeispiel gemäß Fig.3 sind die Plattenelemente 48 vorzugsweise aus 2-3 mm dicken Aluminiumblechen gefertigt.

Bei der in der Fig.4 wiedergegebenen Gestaltung der Wärmedämmschicht 13 umfaßt deren Wärmeleitungsschicht 17 zwei parallele,ca.1-2 mm dicke Aluminiumbleche 52 bzw.53,zwischen denen aus nachgiebigem Kunststoff,z.B. Polyäthylen bestehende Schlauchrohre als Wärmetauscherrohre 18 angeordnet sind.Der Abstand der Aluminiumbleche 52 und 53 ist so gewählt,daß die Kunststoffwärmetauscherrohre etwas flach gequetscht werden,sodaß sie flächig an den beiden Aluminiumblechen 52 und 53 anliegen.Darüberhinaus sind die Wärmetauscherrohre 18 in eine Kunststoffschicht 54 eingebettet,die den zwischen den Wärmetauscherrohren 18 bzw.diesen und den Aluminiumblechen 52 und 53 verbleibenden Zwischenraum ausfüllt.Diese Kunststoffschicht 54,die die Aluminiumbleche 52 und 53 im vorgesehenen Abstand stabil hält, kann als Vergußschicht aus einem selbstaushärtenden Kunstharz oder aus einem geeigneten Hartschaumstoff hergestellt sein.Zur Erhöhung der Wärmeleitungsfähigkeit ist die Kunststoffschicht 54 mit einer Metallfaser- oder Geflecht-Bewehrung versehen.Die innere und die äußere Lage 14 bzw.16 der Wärmedämmschicht sind an die jeweils benachbarte Aluminiumplatte 52 bzw.53 flächig angeklebt.In der Gestaltung gemäß Fig.4 ist die Wärmedämmschicht 13 vorzugsweise als Modul-Fertigteil ausgebildet,das mittels an der Wärmeleitungsschicht 17 festgelegter bzw.von dieser ausgehender Ankerglieder 56 an vorbereiteten Aussparungen 57,beispielsweise in der aus der Fig.4 ersichtlichen Weise an der Gebäudewand 11 festlegbar ist,an deren Außenseite 38 es zusätzlich angeklebt sein kann.

Eine ähnliche Art der Verankerung der Wärmedämmschicht 13
mittels in Vertiefungen der Gebäudewand 11 eingreifender
Ankerglieder 58(Fig.1)kann auch in Verbindung mit den vorerwähnten Gestaltungen der Wärmedämmschicht 13 vorgesehen
sein,wobei sich diese Ankerglieder mit einem äußeren Ankerkopf 59 über eine Unterlagsscheibe 60,die innerhalb
einer Ausnehmung 61 der Wärmeleitungsschicht 17 angeordnet ist,direkt an der inneren Lage 14 der Wärmedämmschicht 13
abstützen,sodaß keine nennenswerte Wärmebrücke zwischen der
Außenwand 11 und der Wärmeleitungsschicht 17 in Kauf genommen werden muß.

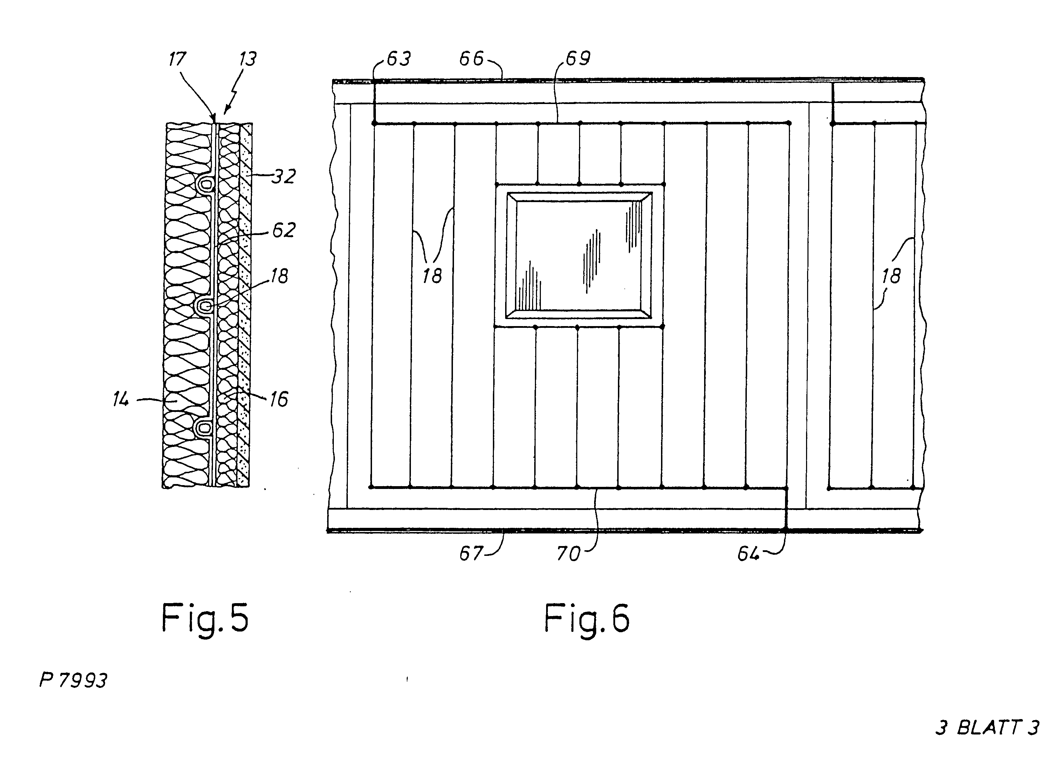

Die in der Fig.5 widergegebene Gesaltung der Wärmedämmschicht 13 unterscheidet sich von derjenigen gemäß Fig.2
im wesentlichen nur dadurch,daß die äußere Lage 62 ihrer
Wärmeleitungsschicht 17 als eine ebene Blechplatte ausgebildet ist und daß die zwischen dem Außenputz 32 und dieser
Blechplatte 62 angeordnete äußere Lage 16 der Wärmedämmschicht 13 eine etwas geringere Dicke aufweist als die
innere Lage 14,was im Ergebnis einer relativen Verlagerung
der Wärmetauscherrohre 18 nach außen hin entspricht.Die
Anordnung einer solchen asymmetrischen Dämmschicht 13 an
der der direkten Sonneneinstrahlung ausgesetzten Südseite
eines Gebäudes hat den Vorteil,daß sich auch die durch Absorption der direkten Sonnenstrahlung in der Außenputzschicht 32 anfallende Wärme,zumindest teilweise,in den
Primärkreislauf der Wärmepumpe 21 leichter einkoppeln und
als zusätzlicher Wärmegewinn ausnutzen läßt.Hierzu ist
es dann allerdings erforderlich,die Wärmeleitungsschicht 17
auf eine Temperatur abzukühlen,die niedriger ist als die Temperatur der Außenputzschicht 32,wobei eine untere Temperaturschranke für die Temperatur der Wärmeleittungsschicht 17 dadurch gegeben ist,daß die Temperatur der Außenputzschicht durch die Wärmeentnahme nicht unter die Außenlufttemperatur absinken darf.Man erkennt,daß die Anordnung der Wärmeleitungsschicht 17 bezüglich der Außenfläche 38 der Gebäudewand 11 und bezüglich der Außenputzschicht 32 unter dem Gesichtspunkt der Rückgewinnung nach außen strömender Wärme und der Mitausnutzung in der Außenputzschicht 32 durch Strahlungsabsorption anfallender Wärme einer Optimierung fähig ist;diese Optimierung der Abstandsrelationen innerhalb der Wärmedämmschicht 13 ist bei Kenntnis der klimatischen Bedingungen ohne weiteres rechnerisch durchführbar und technisch ohne Schwierigkeit realisierbar.

Wie bereits angesprochen kann die eine Gebäudewandaußenfläche 38 bedeckende Wärmedämmschicht 13 aus vorgefertigten Dämmschicht-Elementen zusammengesetzt sein,deren Vorfertigungsgrad bis zum vollständigen Schichtaufbau getrieben sein kann.Im allgemeinen wird man jedoch allenfalls die Wärmeleitungsschicht 17 mit der einen oder anderen wärmedämmenden Lage 14 bzw.16 zu einem einzigen Fertigteil zusammenfassen,um durch eine in horizontaler Richtung versetzte Anordnung der anderen wärmedämmenden Lage bezüglich dieses Fertigteils deckungsgleiche Stoßfugen sämtlicher drei Funktionsschichten 14,16 und 17 vermeiden zu können.Günstig ist es jedoch,wenn das jeweils die Wärmetauscherrohre umfassende Fertigteil eine an die Stockwerkshöhe angepaßte Höhe hat,mit etwa in Decken- bzw.Bodenhöhe angeordneten Vorlauf- und Rücklauf-Anschlüssen 63 bzw.64 sodaß es installationstechnisch einfach ist,mehrere solcher Wärmetauscherrohr-Register mittels einer Vorlauf-Sammelleitung 66 und einer Rücklauf-Sammelleitung 67 in Parallel-

/17

schaltung miteinander zu verbinden(Fig.6),sodaß der Strömungswiderstand des Kühlerkreislaufs der Wärmepumpe 21 günstig niedrig bleibt und die elektrische Leistungsaufnahme einer den Transportmittelstrom vermittelnden Förderpumpe 68 (Fig.1)vernachlässigbar bleibt.

Zu diesem Zweck ist es auch günstig,wenn die gemäß Fig.6 vertikale Strömungspfade markierenden Wärmetauscherrohre 18 mittels einer horizontalen Vorlauf-Sammelleitung 69 und einer Rücklauf-Sammelleitung 70 parallel geschaltet sind.Solche Rohrregister mit rechtwinklig an die Sammelleitungen 69 und 70 anschließenden Wärmetauscherrohren 18 sind am einfachsten mit Hilfe miteinander verschweißter Stahlrohre realisierbar,was allerdings aus fertigungstechnischen Gründen eine werksseitige Vorfertigung dieser Rohrregister erfordert.

Typische horizontale Abstände zwischen den Wärmetauscherrohren 18 liegen zwischen 20 und 40 cm;typische Leitungsquerschnitte der Wärmetauscherrohre 18 liegen zwischen 15 und 20 mm.

Die erfindungsgemäße Anordnung vermittelt in denjenigen Bereichen der Gebäudeumschließungsflächen,die mit der Wärmedämmschicht 13 versehen werden können,eine äußerst wirksame Wärmedämmung,was Voraussetzung für einen Betrieb der Wärmepumpe mit hoher Leistungsziffer ist.Es versteht sich, daß,wie durch den Kühlerkreislauf 71 gemäß Fig.1 angedeutet,zusätzlich zu dem die Wärmerückgewinnung vermittelnden Kühlerkreislauf weitere,zu diesem parallel geschaltete Kühlerkreisläufe vorgesehen sein können,mit denen aus dem Erdreich oder dem Grundwasser oder weiteren Temperaturbädern Wärme in den Verdampfer der Wärmepumpe 21 eingekoppelt

/18

werden kann.Auch durch den Einsatz von Warmwasser- und/oder
Latentspeichern kann in bekannter Weise die Wirtschaftlichkeit der erfindungsgemäßen Wärmepumpen- Heizungsanordnung
noch erheblich verbessert werden.

Bernhard Krüger                    Leonberg,den 7.11.1980
Albert-Moser-Straße 63             P 79 93
7053 Kernen i.R.


PATENTANSPRÜCHE


1.  Anordnung zur Einkopplung von Wärme in den Primärkreislauf der Wärmepumpe in einer zur Raumheizung und Brauchwasser-Aufbereitung in einem Gebäude vorgesehenen monovalenten Wärmepumpen-Heizanlage,mit einem als Rohrregister ausgebildeten,eingangsseitig an den Verdampfer der
Wärmepumpe anschließbaren bzw,angeschlossenen,als Wärmetransportmittel Wasser mit einem Frostschutzmittel enthaltenden Wärmetauscher,mit dem mindestens ein Teil der
durch die äußeren Raumumfassungsflächen(Fundament,Außenwände,Dach)aus dem Gebäude abfließenden bzw.von außen
dem Gebäude zufließenden Wärme in den Verdampferkreislauf der Wärmepumpe einkoppelbar ist,wobei zwischen der
Verlegungsebene der Wärmetauscherrohre und dem Gebäudeinnenraum eine Schicht aus wärmedämmendem Material vorhanden ist,die im Bereich der tragenden Wandschale an
deren Außenseite angeordnet ist,
dadurch gekennzeichnet,daß die Wärmetauscherrohre(18)in
einer inneren Ebene(20)der Wärmedämmschicht(13)angeordnet
sind,und daß zwischen dem von der Verlegungsebene(20)
aus gesehenen inneren Lage(14)der Wärmedämmschicht(13)

, /2

und deren von dieser Ebene(20)aus gesehen äußeren
Lage(16)mindestens eine mit den Wärmetauscherrohren in gutem Wärmekontakt stehende Schicht(17)aus
einem Material mit hoher Wärmeleitfähigkeit vorgesehen ist.

2. Anordnung nach Anspruch 1,
   dadurch gekennzeichnet,daß die Wärmeleitungsschicht(17)
   aus dünnwandigem Aluminiumblech von ca.2-3 mm Dicke besteht,an dem mindestens Abschnitte des Mantels der Wärmetauscherrohre(18)flächig anliegen.

3. Anordnung nach Anspruch 2,
   dadurch gekennzeichnet,daß die Wärmetauscherrohre(18)
   in entsprechend ihrem Verlegungsmuster verlaufende
   Rillen(19;46;47;49)der Wärmeleitungsschicht(17)eingebettet sind.

4. Anordnung nach Anspruch 3,
   dadurch gekennzeichnet,daß die Wärmeleitungsschicht(17)
   im Bereich der Wärmetauscherrohre(18)an deren dem Innenraum des Gebäudes zugekehrten Mantelseite anliegt.

5. Anordnung nach einem der vorhergehenden Ansprüche,
   dadurch gekennzeichnet,daß die Wärmeleitungsschicht(17)
   mindestens entlang der Wärmetauscherrohre(18)zwei-lagig
   ausgebildet ist,wobei die eine Lage(43;48;42)innenseitig
   und die andere Lage(44;48;53;62)außenseitig an den Wärmetauscherrohre(18)anliegt.(Fig.2,3,4,5).

6. Anordnung nach Anspruch 5,
dadurch gekennzeichnet,daß die Wärmeleitungsschicht(17)
aus Plattenelementen(48)zusammengesetzt ist,die je zwei
Rillen(49)haben,die einander benachbarte Wärmetauscher ohre
rohre(18)halbseitig umgreifen und bezüglich der Verlegungsebene(20)alternierend auf deren Außen- und Innenseite angeordnet sind und mit einem schmalen Rand-lansch
flansch(50)jeweils an den auf der anderen Seite der Verlegungsebene(20)angeordneten,zwischen den Rillen(49)verlaufenden Abschnitt(51)des benachbarten Plattenelementes(48)anliegen und gegebenenfalls an diesem befestigt
oder befestigbar sind(Fig.3).

7. Anordnung nach Anspruch 5,
dadurch gekennzeichnet,da+ die Wärmeleitungsschicht(17)
bezüglich der Verlegungsebene(20)der Wärmetauscherrohre(18)symmetrisch ausgebildet ist(Figuren 2 und 4).

8. Anordnung nach Anspruch 7,
dadurch gekennzeichnet,daß die Wärmetauscherrohre(18)
zwischen ebenen Blechen(52,53)mit hoher Wärmeleitfähigkeit angeordnet sind,die mittels einer Zwischenschicht(54)
beispielsweise einer Hartschaumstoffschicht gegeneinander abgestützt sind(Fig.4).

9. Anordnung nach Anspruch 8 oder einem der vorhergehenden
Ansprüche,
dadurch gekennzeichnet,daß die Wärmetauscherrohre(18)aus
einem nachgiebigen Kunststoffmaterial bestehen und mit
einer eine flächige Anlage an den Platten der Wärmeleitungsschicht(17)vermittelnden Quetschung an diesen anliegen bzw.zwischen diesen gehalten sind.

10. Anordnung nach Anspruch 9,
dadurch gekennzeichnet, daß die Kunststoffrohre (18) mit einer dünnwandigen, ca. 0,1 - 0,3 mm dicken Aluminiumfolie umwickelt sind.

11. Anordnung nach einem der vorhergehenden Ansprüche,
dadurch gekennzeichnet, daß mindestens die gegebenenfalls zweilageige Wärmeleitungsschicht (17) mit den Wärmetauscherrohren (18) zu Fertigteilen zusammengefaßt sind, die an der in Soll-Lage angeordneten inneren Lage (14) der Wärmedämmschicht (13) fixierbar sind oder zusammen mit dieser an der Gebäudewand (11) festlegbar sind.

12. Anordnung nach Anspruch 11,
dadurch gekennzeichnet, daß die Fertigteile die innere Lage (14) der Wärmedämmschicht (13) mit umfassen, und daß zur Festlegung der Fertigteile an der Gebäudewand (11) Befestigungsanker (58) vorgesehen sind, die in Bohrungen der tragenden Wandschale (11) eingreifen und sich mit einem Kopf (59) an der Außenseite der inneren Wärmedämmschicht-Lage (14) über Unterlagsscheiben (60) abstützen, die innerhalb des Randes von Aussparungen (60) der Wärmeleitungsschicht (17) angeordnet sind.

13. Anordnung nach Anspruch 11,
dadurch gekennzeichnet, daß die Fertigteile sowohl die innere als auch die äußere Lage (14 bzw. 16) der Wärmedämmschicht mit umfassen, wobei die zur Befestigung der Fertigteile an der Gebäudewand (11) vorgesehenen Verankerungsmittel (56;58) im Berieich von Aussparungen der ä äußeren Lage (16) der Wärmedämmschicht (13) angeordnet sind.

- 5 -

14. Anordnung nach einem der vorhergehenden Ansprüche 11-13, dadurch gekennzeichnet,daß für die Anordnung an den vertikalen Außenwänden(11)vorgesehene Fertigteile als sich vorzugsweise über die Stockwerkshöhe erstreckende Wandelemente ausgebildet sind,deren Wärmetransportmittel-Strömungspfade zwischen in Decken- bzw.Fußbodenhöhe verlaufenden Vorlauf- bzw.Rücklaufsammelleitungen(66bzw67)parallel geschaltet sind(Fig.6).

15. Anordnung nach einem der vorhergehenden Ansprüche 11-14, dadurch gekennzeichnet,daß die Wandelemente ihrerseits eine Anzahl strömungsmäßig paralleler,zwischen einer oberen Vorlauf-Sammelleitung(69)und einer unteren Rücklauf-Sammelleitung(70)verlaufender Strömungspfade(18) mit vorzugsweise vertikaler Strömungsrichtung des Wärmetransportmittel umfassen(tig.6).

Fig.1

Fig. 2

Fig. 3

Fig. 4

2/3

0028840

P 7993

3 BLATT 2

17  13

32

62

18

14  16

**Fig. 5**

63  66  69

18

18

18

67  70  64

**Fig. 6**

P 7993